# EUROPÄISCHE PATENTSCHRIFT

(11) **EP 1 783 852 B1**
(45) Veröffentlichungstag und Bekanntmachung des Hinweises auf die Patenterteilung: **06.10.2010**
(21) Anmeldenummer: 07103829.3
(22) Anmeldetag: 26.02.2004
(51) Int. Cl.: H01M 10/052

(54) **Separatordispersion für Li-Polymer-Batterien**
Separator dispersion for Li-polymer-batteries
Dispersion de sépérateur pour batterie lithium-polymère

(30) Priorität: 28.02.2003 DE 10308945
(43) Veröffentlichungstag der Anmeldung: 09.05.2007
(62) Teilanmeldung aus: 04714781.4
(73) Patentinhaber: Dilo Trading AG, 6300 Zug (CH)
(72) Erfinder: NAARMANN, Herbert, 67227 Frankenthal (DE); KRUGER, Franz Josef, 65817 Eppstein (DE)
(74) Vertreter: TBK-Patent

(56) Entgegenhaltungen:
- EP-A- 0 942 485
- WO-A-99/44247
- DE-A1- 10 112 613
- DE-A1- 10 134 057
- US-B1- 6 218 051
- ANONYMOUS: "Dispersion" INTERNET ARTICLE, [Online] Februar 2005 (2005-02), XP002338526 Dokumentkennung RD-04-02073 Gefunden im Internet: URL:http://www.roempp.com/prod/index1.html > [gefunden am 2005-07-29]

## Beschreibung

Die Erfindung betrifft einen neuen Separator für Li-Polymer-Batterie.

Im Allgemeinen dient der Separator zur Trennung von Anode und Kathode und sollte auch ein Durchbrennen ("meltdown") bzw. ein Versagen ("breakdown") des Batteriesystems verhindern. Herkömmliche Separatorsysteme von Lithium-Polymer-Batterien sind z.B. in dem Buch "Lithium Ion Batteries, herausgegeben von M. Wakihara und O. Yamamoto, Seite 195 (1998), Verlag VCH, Weinheim" beschrieben. Weitere Informationen bezüglich herkömmlicher Separatorsysteme, insbesondere für Lithium-Polymer-Batterien, sind im "Handbook of Battery Materials, herausgegeben von I. O. Besenhard, Seiten 559 bis 563 (1998), Verlag VCH, Weinheim" beschrieben.

Herkömmlicherweise werden Membranen, z.B. auf der Basis von Polypropylen, Polyether oder Kombinationen davon, verwendet. Beispiele davon sind Celgard®, Setala®, HiPORE®, Exepol®. Außerdem sind Gelelektrolyt-Separatoren bekannt (z.B. von Bellcore). Diese können gemäß dem vorstehend genannten Handbook of Battery Materials auf Basis von Polyvinyldenflurid: Hexafluorpropylen (PVDF:HFP) aufgebaut sein. Diese Gelelektrolyt-Separatoren liegen in Stärken von ca. 50 µm vor. Außerdem weisen sie ca. 60 Gew.-% Polymer auf.

Idealerweise haben die in Batterien eingesetzten Separatoren keinen Ionentransportwiderstand. In der Praxis jedoch muss einiger Widerstand toleriert werden.

Typische Eigenschaften der vorstehend genannten mikroporösen Membranen, die als herkömmliche Separatoren eingesetzt werden, sind in der nachstehenden Tabelle 1 aufgeführt (aus Handbook of Battery Materials, Seite 558, 10.6).

**Tabelle 1**

| | Celgard 2400® | Celgard 2300® |
|---|---|---|
| Struktur | 1 Schicht: PP | 3 Schichten: PP/PE/PP |
| Stärke [µm] | 25 | 25 |
| Porosität (%) | 38 | 38 |
| Luftdurchlässigkeit | 35 | 25 |
| Durchschlagfestigkeit | 380 | 480 |

Ein weiteres wesentliches Charakteristikum von Separatoren ist das Tränken bzw. Benetzen des Separators mit Elektrolyt, d.h. mit Leitsalz im jeweiligen optimalen aprotischem Lösungsmittel. Weitere Probleme mit den herkömmlichen Separatorsystemen gibt es beim Einbringen des Separators zwischen Anode und Kathode.

DE-A-101 34 057 ist auf Lithium-Polymer-Batterien und Verfahren zu ihrer Herstellung gerichtet. Die beschriebene Lithium-Polymer-Batterie besteht aus einer Anoden- und einer Kathodenmasse sowie einer Elektrolytzwischenschicht.

DE-A-101 12 613 offenbart Polymerelektrolyte für Lithiumpolymerbatterien, die durch einfaches Vermischen der Komponenten der Polymergelelektrolyt erhalten werden. Der Separator liegt in einer festen Form als Folie vor.

Gemäß WO 99/44247 A wird eine Membran eines Gelkompositelektrolyts mit einer gleichförmigen Membranstärke beschrieben.

In EP-A-0 942 485 wird ein Separator basierend auf einem Separatorfilm mit darin eingefüllter Elektrolytlösung beschrieben.

In US-B-6 218 051 wird ein polymerbasierter Separator beschrieben, der durch Wärmelamination auf die Elektrodenmembranen aufgebracht wird. In das Separatorsystem wird ein Leitsalz als Lösung in eine vorher hergestellte Separatormembran eingebracht.

Deshalb liegt der Erfindung ein vollkommen neues Konzept zugrunde, das durch eine neue Materialkombination die vorstehend genannten Probleme der herkömmlichen Separatorsysteme in Lithium-Polymer-Batterien verbessern soll.

Daher ist es die Aufgabe der Erfindung, einen verbesserten Separator für eine Lithium-Polymer-Batterie bereitzustellen.

Diese Aufgabe Separator nach Anspruch 1 gelöst.

Eine auf Grundlage der Erfindung herstellbar Lithium-Polymer-Batterie hat wenigstens eine Anode und Kathode, sowie einen Separator, der zur Trennung von Anode und Kathode eine Separatorschicht mit einer Dispersion aufweist.

Im Folgenden werden die Lithium-Polymer-Batterie und deren bevorzugte Ausführungsformen, sowie das Herstellungsverfahren für die Lithium-Polymer-Batterie und bevorzugte Ausführungsformen dafür an Hand von Figuren näher erläutert.

### Es zeigen:

Fig. 1a eine Anode einer Lithium-Polymer-Batterie;
Fig. 1b eine Kathode einer Lithium-Polymer-Batterie; und
Fig. 2 eine Lithium-Polymer-Batterie mit einer Separatorschicht zwischen Anode und Kathode.

Anschließend wird die Li-Polymer-Batterie anhand einer ersten Ausführungsform näher erläutert.

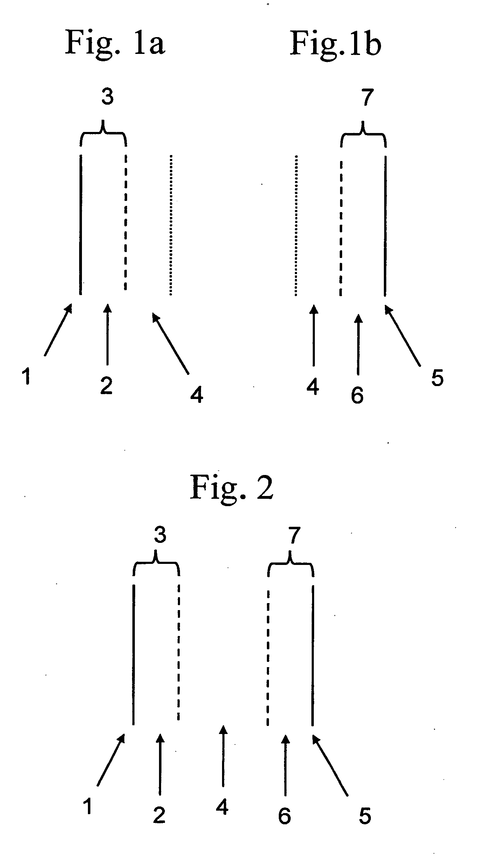

Die Fig. 1a zeigt eine Anode 3 mit Ableiter 1 und Anodenmasse 2. Auf der Anodemasse 2 ist der Separator in Form einer Separatorschicht 4 ausgebildet. Analog kann die Kathode 7 mit einem Ableiter 5 und einer Kathodenmasse 6 mit einer Separatorschicht 4 versehen sein, wie in Fig. 1b gezeigt ist. Die Separatorschicht 4, die eine Dispersion aufweist, ist in der in Fig. 2 gezeigten Lithium-Polymer-Batterie zwischen der Anode 3 und Kathode 7 angeordnet. Im Allgemeinen genügt eine Separatorschicht 4, die zwischen Anode 3 und Kathode 7 jeweils an die Elektrodenmasse 2,6 angrenzend angeordnet ist, so dass ein laminiertes Verbundsystem mit mehrschichtigem Aufbau entsteht.

Im Allgemeinen umfasst die Anode 3 bzw. die Kathode 7 einen Ableiter 1,5 und eine Elektrodenmasse 2,6. Der Ableiter 1 der Anode 3 besteht bevorzugt aus einer Kupfer-Folie oder einem Kupfer-Netz, jedoch können auch weitere für Anodenmaterialien geeignete Metalle und Metalllegierungen eingesetzt werden. Der Ableiter 5 der Kathode 7 besteht bevorzugt aus Aluminium und kann als Folie oder Netz ausgebildet sein. Auch hier ist die Verwendung nicht auf Aluminium beschränkt, sondern alle für Kathodenmaterialien üblicher Weise eingesetzten Metalle und Metalllegierungen können ebenso eingesetzt werden. Des Weiteren sind die Ableiter 1,5 bevorzugt geprimert, um die Elektronenleitung weiter zu verbessern.

Die Schichtdicke der Anodenmasse 2 beträgt bevorzugt 20-60 µm und die Schichtdicke der Kathodenmasse 6 bevorzugt 20-80 µm.

Dispersionen für den Separator umfassen Leitsalze, Lösungsmittel, Gerüstsubstanzen und Leitsalzadditive. Leitsalze können aus der aus LiPF₆, LiClO₄, Li-Triflaten und deren Derivaten, sowie Li-Organoboraten bestehenden Gruppe ausgewählt sein. Jedoch können auch Herkömmlicherweise eingesetzte Lithium-Leitsalze, wie sie z.B. im "Handbook of Battery Materials, Seiten 462 und 463" beschrieben sind, verwendet werden.

Leitsalzadditive sind Hilfsstoffe, die beispielsweise als Elektronen-Donor/Acceptor-Komponenten in den Elektronentransfer eingreifen. Bevorzugt eingesetzt werden Polyvinylpyrrolidone, Polyketone, Polyether, wahlweise mit verkappten Endgruppen wie z.B. Alkyl- (z.B. -CH₃) und/oder Methacryloylresten (CH₂=C(CH₃)CO-), Polyvinylether, Polyvinylpyridine, Polyvinylimidazole, Polythiophene, insbesondere deren Homo- und Copolykondensate, und Copolymere aus diesen Verbindungen. Ferner können diese Leitsalzadditive auch Quellmittel für die aprotischen Lösungsmittel darstellen. Bevorzugt eingesetzte Quellmittel für die aprotischen Lösungsmittel sind z.B. Terpolymere von Fluorelastomeren, die auch unter der Marke Dyneon® bekannt sind, oder Fluorelastomercopolymere. Weiterhin können als Leitsalzadditive auch Polybutadiene, Polyisoprene und/oder andere Kautschuke sowie Polyhydroxyl-Derivate, wie Stärke, Zucker und Polyvinylalkohole, die weitgehend mit Alkyl-oder Methacryloylgruppen verkappt sind und deren nicht veretherte oder veresterte OH-Gruppen mit Lithium substituiert als LiO-Einheiten vorliegen, erfindungsgemäß eingesetzt werden. Auch veresterte oder veretherte Polyhydroxyl-Derivate können erfindungsgemäß ausgewählt werden.

Als Lösungsmittel für die erfindungsgemäße Lithium-Polymer-Batterie können indifferente Komponenten, vorzugsweise aprotische Lösungsmittel wie Alkylcarbonate, und Perfluoralkylether, sowie alkylierte Glykole, insbesondere Ethylen- und/oder Propylenglykole, eingesetzt werden. Beispiele solcher Alkylcarbonate sind z.B. Propylen-, Ethylen-, Dimethylcarbonate und dergleichen. Außerdem können auch Mischungen dieser Lösungsmittel eingesetzt werden.

Als Gerüstsubstanzen werden anorganische Verbindungen eingesetzt. Beispiele von anorganischen Materialien sind: Metalloxide wie MgO, CaO, Al₂O₃, SiO₂ und TiO₂, Silikate wie Inselsilikate, z.B. Forsterit, Ringsilikate, z.B. Benitoit, Ketten- und Bandsilikate wie Wollastonit und Spodumen, Schichtsilikate wie Serpentin, Kaolinit, Talk, Pyrophyllit, Glimmer, Montmorillonit, Bentonit und Vermiculit, und Zeolithe oder ähnliches, Borate wie etwa Li-Metaborat, Phosphate wie Ca₂P₂O₇, Titanate wie Ca-Titanat, Zirkonate, Wolframate, Molybdate, und CaSnO₃ und dergleichen.

Bevorzugt eingesetzte Gerüstsubstanzen haben einen Teilchendurchmesser von 0,5-20 µm. Die Gerüstsubstanzen können jedoch auch aus Partikeln bestehen, die Einzelteilchen umfassen. In diesem Falle liegt der Gesamtpartikeldurchmesser der Gerüstsubstanzen bevorzugt im Bereich von 10 bis 20 µm.

Die Dispersion besteht bevorzugt aus einem oder mehreren Leitsalzen in einer Menge von 5-60 Gew.-% einem oder mehreren Leitsalzadditiven in einer Menge von 0,1 bis 20 Gew.-%, einem oder mehreren Lösungsmitteln in einer Menge von 20-50 Gew.-% und einer oder mehreren Gerüstsubstanzen in einer Menge von 20-60 Gew.-%, jeweils bezogen auf die gesamte Dispersion.

Die vom Separator umfasste Dispersion dient einerseits als Leitsalz- und Elektrolyt-Quelle und verleiht dem System zusätzlich mechanische Stabilität durch die in der Dispersion enthaltenen Gerüstsubstanzen. Weiterhin können in der erfindungsgemäß eingesetzten Dispersion, insbesondere einer Leitsalz-Dispersion, Leitfähigkeitsverluste zwischen Anode und Kathode verringert bzw. vermieden werden. Gerade durch die hohe mechanische Stabilität der Dispersion wird ein Durchbrennen bzw. Kurzschluss im Separator verhindert.

Die Separatorschicht kann 4 aus wenigstens zwei unterschiedlichen Separatorschichten bestehen, die zwischen der Anode 3 und der Kathode 7 angeordnet sind. Durch zwei oder mehrere Separatorschichten 4 mit unterschiedlichen Zusammensetzungen, die jeweils an die Anodenmasse 2 als auch die Kathodenmasse 6 anliegen, kann die Haftung der Separatorschicht 4 an die jeweilige Elektrodenmasse 2,6 gewährleistet werden, auch wenn die Elektrodenmassen 2,6 aus unterschiedlichen Materialien aufgebaut sind.

Alle übrigen Merkmale, wie erfindungsgemäß eingesetzte Materialien oder Anwendungsbereiche können wie beschrieben ausgewählt und variiert werden.

In dem Herstellungsverfahren werden zur Herstellung einer für einen Separator eingesetzten Dispersion sämtliche Einsatzstoffe, wie etwa Leitsalze, Lösungsmittel, Gerüstsubstanzen und optional Leitsalzadditive, in einem Dissolver bei Umdrehungen von etwa 50-2500 U/min vermischt, bis eine einphasige pastöse Dispersion vorliegt. Die Einsatzstoffe können entweder alle gleichzeitig zusammengerührt werden oder es kann bevorzugt das Leitsalz vorgelegt und anschließend ein oder mehrere Lösungsmittel unter Rühren zugegeben werden, um anschließend auch noch Gerüstsubstanzen bzw. Leitsalzadditive unter Rühren zuzumischen. Hierin erfolgt das Rühren in einem Dissolver bei annähernd 50-2500 U/min, bevorzugt bei 500-2000 U/min und insbesondere bei 1000-2000 U/min. Nach der Zugabe aller Einsatzstoffe kann die Dispersion beispielsweise auch bei geringerer Rührgeschwindigkeit wie etwa 1000 U/min solange weiter gerührt werden, bis eine einphasige pastöse Dispersion vorliegt. Diese erfindungsgemäß hergestellte, einphasige pastöse Dispersion kann mittels einer Standardpastiereinrichtung auf die Anodenmasse 2 und/oder Kathodenmasse 6 aufgetragen werden, um eine Lithium-Polymer-Batterie herzustellen. Hierbei kann die Beschichtung der Elektroden 3,7 bzw. Elektrodenmassen 2,6 bevorzugt kontinuierlich über Extruder oder Beschichtungsanlagen erfolgen. In diesem Verfahren wird die Dispersion bevorzugt mittels Breitschlitzdüsen und/oder Pastiermaschinen parallel zur Extrusion der Elektrodenmassen 2,6 als Separatorschicht 4 aufgetragen. Die Separatorschicht beträgt bevorzugt 10-50 µm und weiter bevorzugt 20-35 µm.

Während in einer Ausführungsform des Herstellungsverfahrens das Verfahren so durchgeführt wird, dass nur die Anodenmasse 2 bzw. die Kathodenmasse 6 mit der Dispersion beaufschlagt wird, kann alternativ in einer weiteren Ausführungsform die Dispersion jedoch auch auf die Anodenmasse 2 und die Kathodenmasse 7 aufgetragen werden. So wird ein Laminatverbund aus Anode 3 und Kathode 7 mit wenigstens zwei Separatorschichten 4 als Trennschicht hergestellt, so dass die Schichtstärke der gesamten Separatorschicht 4 gleich 15-70 µm und vorzugsweise 20-50 µm beträgt.

Somit wird durch das Herstellungsverfahren ein einfaches und kostengünstiges Verfahren zur Herstellung von Lithium-Polymer-Batterien geschaffen.

Vorzugsweise erfolgt das Herstellungsverfahren für Lithium-Polymer-Batterien unter Ausschluss von Feuchtigkeit. Hierzu kann unter Inertgasatmosphäre, wie zum Beispiel unter Argonatmosphäre die Herstellung der einzelnen Elektrodenmassenschichten 2,6 bzw. Separatorschichten 4 durchgeführt werden.

Anschließend werden zur weiteren Veranschaulichung der Lithium-Polymer-Batterien sowie der Herstellungsverfahren für die Herstellung der Lithium-Polymer-Batterien, umfassend ein Verbundsystem aus Anode/Separatorschicht(en)/Kathode anhand von Beispielen näher erläutert.

### Beispiel 1

Herstellen einer Dispersion mit LiPF₆ als Leitsalz. 25 Gewichtsteile LiPF₆ als Leitsalz wurden mit 20 Gewichtsteilen Ethylencarbonat (EC) und 10 Gewichtsteile Propylencarbonat (PC) als Lösungsmittel vermischt und in einem Disperser 60 min bei 1000 U/min gerührt. Dann wird die erhaltene Dispersion mit 25 Gewichtsteile MgO und 15 Gewichtsteile Glimmer als Gerüstsubstanzen sowie mit 6 Gewichtsteile eines Fluorpolymeren auf Basis von PVDF/HFP (Kynar 2801®) versetzt und bei Raumtemperatur weitere 60 Minuten bei 1000 U/min gerührt, so dass eine einphasige Dispersion 4 entstand. Diese Dispersion wurde zur Ausbildung einer Separatorschicht mittels einer Pastiermaschine sowohl auf die Anodenmassen 2 als auch auf die Kathodenmasse 6 wie in den Figuren 1A und 1B gezeigt in einer jeweils 20µm starken Schicht aufgetragen.

### Beispiel 2

Das Verfahren wurde analog zum Beispiel 1 durchgeführt, jedoch war das verwendete Leitsalz Lithiumoxalatoborat. Weiterhin wurden sämtliche Einsatzstoffe bei 50°C und 10⁻² Torr 60 Minuten lang entgast und das gesamte Verfahren wurde unter einer Argon-Atmosphäre durchgeführt. Die vermischten Einsatzstoffe waren wie folgt:

| | | |
|---|---|---|
| 1. | 20 Gewichtsteile | Lioxalato-borat |
| 2. | 10 Gewichtsteile | Ethylencarbonat EC |
| 3. | 10 Gewichtsteile | Propylencarbonat PC |
| 4. | 20 Gewichtsteile | Monoglykol-bis-tetra-fluorethylether |
| 5. | 25 Gewichtsteile | MgO |
| 6. | 5 Gewichtsteile | Polyvinylpyrrolidon (Luviskol K90®) |

### Beispiele 3 bis 10

In den Beispielen 3 bis 10 erfolgte die Herstellung von Separat-Dispersionen analog zu Beispiel 1 und die eingesetzten Einsatzstoffe wie Leitsalz, Lösungsmittel, Gerüstsubstanz und Leitsalzadditiv sind in der Tabelle 2 angegeben. Außerdem sind die jeweiligen Gewichtsprozente mit angegeben.

**Tabelle 2**

| Beispiel Nr. | Leitsalz/ Gew.-T. | L.M./Gew.-T. | Gerüstsubstanz/ Gew.-T. | Leitsalzadditiv/ Gew.-T. |
|---|---|---|---|---|
| Beispiel 3 | LiPF₆/20 | EC/20, DEC/20 | MgO/30 | Kynar/10 |
| Beispiel 4 | LiPF₆/25 | EC/20, DMC/20 | MgO/25 Glimmer/10 | Kynar/10 |
| Beispiel 5 | LiOB/20 | DME/20, DMC/20 | MgO/20 Chrysotil/10 | Dyneon/10 |
| Beispiel 6 | Li-Triflat/ 30 | DMC/10, DEC/10 | Al₂O/25 CaO_{3/}10 | Kynar/15 |
| Beispiel 7 | LiCl_{4/}25 | EC/25, PC/25 | MgO/10 | Kynar/15 |
| Beispiel 8 | LiOB/10 LiPF₆/20 | EC/20, PC/20 | MgO/10 Li-Metaborat/10 | Kynar/10 |
| Beispiel 9 | LiPF₆/20 | EC/20, DEC/20 | Vermiculit/20 MgO/10 | Kynar/10 |
| Beispiel 10 | LiPF₆/25 | EC/20, DMC/20 Fluorether/10 | Zeolith/10 CaO/10 | Dyneon/5 |

| | | | | |
|---|---|---|---|---|
| EC = Ethylencarbonat PC = Propylencarbonat DEC = Diethylcarbonat DMC = Dimethylcarbonat DME = Ethylenglykoldimethylether Fluorether = Monoglykol-bis-tetra-fluoralkylether LiOB = Li-oxalatoborat Kynar = Fluorpolamer auf Basis von PVDF/HFP (Kynar 2801®) Dyneon = Terpolymer PVDF/HFP/Perfluoralkoxyether (Dyneon 210®) | | | | |

Gemäß Beispiel 1 wurden die Komponenten vermischt und die jeweils enthaltene Dispersion auf die Anodenmassen 2 bzw. Kathodenmassen 6 in einer Schicht von jeweils ca. 20 µm Stärke aufgetragen. Hierbei wurden alle Arbeiten unter Argonatmosphäre unter Ausschluss von Feuchtigkeit ausgeführt.

### Beispiel 11

Herstellen einer Lithium-Polymer-Batterie

### a) Herstellung der Kathode 7

Auf eine Al-Folie (Stärke: 18 µm, Breite 150 mm) mit einer Primerschicht (3 µm Stärke) aus einem Fluorterpolymer (Dyneon THV 220 D) mit 30 Gew.-% leitfähigem Ruß (Ensaco®-Ruß) (Gew.-% sind bezogen auf den Feststoffanteil des Fluorterpolymeren) wurde mittels eines Extruders eine Folie aus Kathodenmasse in einer Schichtstärke von 30 µm aufgetragen:

| | |
|---|---|
| LiCooxid SS 5 | 75 Gewichtsteile |
| LiOB | 5 Gewichtsteile |
| Polymerbinder Kynar 2801®¹ | 10 Gewichtsteile |
| Aprotisches Lösungsmittel PC | 10 Gewichtsteile |

| | |
|---|---|
| ¹ Fluorpolymer auf Basis von PVDF/HFP | |

### b) Auftragung der Separatorschicht 4

Auf die unter Punkt 11a hergestellte Kathodenmasse 6 mit Ableiterfolie 5 wurde die im Beispiel 1 hergestellte einphasige Dispersion in einer ca. 20 µm starken Schicht aufgetragen.

### c) Herstellen des Verbundsystems mit der Anode 3

Eine Ableiterfolie 1 (Cu, Stärke: 18 µm, Breite 150 mm) wurde mittels eines Collin-Extruders bei 120 - 130°C mit einer Anodenmasse 2 in einer Stärke von 35 µm beaufschlagt:

| | |
|---|---|
| MCMB 25/28®¹ | 75 Gewichtsteile |
| LiOB | 10 Gewichtsteile |
| Polymerbinder Kynar 2801®² | 8 Gewichtsteile |
| Aprotisches Lösungsmittel PC | 7 Gewichtsteile |

| | |
|---|---|
| ¹ Mesocarbonmicrobeads (Osaka Gas Chemicals Co., Ltd.; synthetischer Graphit) ² Fluorpolymer auf Basis von PVDF/HFP | |

Die somit erhaltene Anode 3 wurde dann mit der unter den Punkten a und b erhaltenen Kathode 7 mit aufgetragener Separatorschicht 4 zu einem Verbundsystem Ableiterfolie Al/Kathodenmasse/Separator/Anodenmasse/Ableiterfolie Cu kombiniert.

### d) Herstellen einer Wickelzelle

Das oben beschriebene Verbundsystem wurde auf einer Wickelmaschine (Ø 7,5 cm) gewickelt. Die Ableiterfolien 1,5 wurden durch Laser-Schweißen kontaktiert, sowie mit Ableiterscheiben an jedem Pol der Batterie versehen. Danach wurde das gesamte System in einer Schrumpffolie eingehaust.

### e) Batterietest-Laden/Entladen

Die entsprechend Beispiel 11 d) hergestellte Wickelzelle wurde formiert und geladen und zwar in einem 3-Stufenprozess mit einem Strom von 0,15 mA/m² galvanostatisch bei 1,5 V, 2,8 V, 4,2 V und dann potentiostatisch bei 4,2 V. Hierfür wurde ein Ladeprogramm und Geräte der Firma Digatron Aachen eingesetzt. Die Entladung erfolgte ebenfalls mit einem Strom von 0,15 mA/m² bis zu einer Entladespannung von 2,8 V.

Die gemessene Entladekapazität betrug 35 Ah und es wurde nach 150 Zyklen ein Fading von < 2,5 % festgestellt (bei Temperaturen bis zu 60°C).

### f) Vergleichsversuche

Es wurde statt der Lithium-Polymer-Batterie mit den erfindungsgemäßen Separator eine Batterie eingesetzt, in der die Separatormasse eine Polypropylenmembran (Cellgard®) war. Die Separatormembran war mit einer 0,5 M Li-Oxalatoboratlösung in Dimethyl-/Diethylcarbonat (1:1 Volumenanteil) getränkt. Die erhaltenen Entladekapazitäten waren vergleichbar zu den Ergebnissen mit den Batterien mit Dispersionen im Separator. Das Fading bei Raumtemperatur betrug ca. 2 - 2,5 %, jedoch bei 60°C schon 3,5 - 4 %, und war somit gegenüber den Li-Polymer-Batterien mit Dispersionen im Separator deutlich schlechter.

## Patentansprüche

1. Separator für Lithium-Polymer-Batterien, aufgebaut aus einer Dispersion aus Leitsalz, Leitsalzadditiv, aprotischem Lösungsmittel und einer oder mehreren anorganischen Gerüstsubstanz(en) in einer Menge von 20 bis 60 Gew.-%, bezogen auf die gesamte Dispersion,
wobei die anorganische(n) Gerüstsubstanz(en) wenigstens ein Metalloxid umfasst/en, **dadurch gekennzeichnet, dass** die anorganische(n) Gerüstsubstanz(en) einen Teilchendurchmesser von 0,5 bis 20 µm und, wenn die Gerüstsubstanz aus Einzelteilchen umfassender Partikeln besteht, einen Gesamtpartikel-Durchmesser zwischen 10 und 20 µm aufweist/en.

2. Separator nach Anspruch 1, wobei die Dispersion, bezogen auf die gesamte Dispersion, ein oder mehrere Leitsalze in einer Menge von 5 bis 60 Gew.-% und ein oder mehrere aprotische Lösungsmittel in einer Menge von 20 bis 50 Gew.-% enthält.

3. Separator nach Anspruch 2, **dadurch gekennzeichnet, dass** die Dispersion das Leitsalzadditiv in einer Menge von 0,1 bis 20 Gew.-% enthält.

4. Separator nach einem der vorhergehenden Ansprüche, wobei das Metalloxid ausgewählt ist aus MgO, CaO oder Al₂O₃.

5. Separator nach Anspruch 4, wobei das Metalloxid MgO ist.

## Claims

1. Separator for lithium-polymer batteries, composed of a dispersion of conductive salt, conductive salt additive, aprotic solvent and one or more inorganic builders in a proportion of 20 to 60 % by weight of the total dispersion,
wherein the inorganic builder comprises (or the inorganic builders comprise) at least one metal oxide, **characterized in that** the inorganic builder has (or the inorganic builders have) a particle diameter of 0.5 to 20 µm and, if the builder consists of grains comprising individual particles, a total grain diameter of between 10 and 20 µm.

2. Separator according to Claim 1 wherein the dispersion contains one or more conductive salts in a proportion of 5 to 60 % by weight, and one or more aprotic solvents in a proportion of 20 to 50 % by weight, of the total dispersion.

3. Separator according to Claim 2, **characterized in that** the conductive salt additive is contained in the dispersion in a proportion of 0.1 to 20 % by weight.

4. Separator according to any one of the preceding claims wherein the metal oxide is selected from MgO, CaO or Al2O3.

5. Separator according to Claim 4 wherein the metal oxide is MgO.

## Revendications

1. Séparateur pour des batteries lithium-polymère, constitué d'une dispersion de sel conducteur, additif de sel conducteur, solvant aprotique, et une ou plusieurs substance(s) d'ossature anorganique(s), en une quantité dans la fourchette comprise entre 20 et 60 % en poids, en se référant à la dispersion globale,
la ou les substance(s) d'ossature anorganique (s) comprenant au moins un oxyde métallique, **caractérisé en ce que** la ou les substance(s) d'ossature anorganique(s) présente(nt) un diamètre de particule dans la fourchette comprise entre 0,5 et 20 µm et, lorsque la substance d'ossature est composée de particules comprenant des particules individuelles, présente(nt) un diamètre de particule global dans la fourchette comprise entre 10 et 20 µm.

2. Séparateur selon la revendication 1, dans lequel la dispersion, en se référant à la dispersion globale, contient un ou plusieurs sels conducteurs, en une quantité dans la fourchette comprise entre 5 et 60 % en poids, et un ou plusieurs solvants aprotiques, en une quantité dans la fourchette comprise entre 20 et 50 % en poids.

3. Séparateur selon la revendication 1, **caractérisé en ce que** la dispersion contient l'additif de sel conducteur en une quantité dans la fourchette comprise entre 0,1 et 20 % en poids.

4. Séparateur selon l'une des revendications précédentes, **caractérisé en ce que** l'oxyde métallique est sélectionné parmi MgO, CaO ou Al₂O₃.

5. Séparateur selon la revendication 4, dans lequel l'oxyde métallique est du MgO.
